Europäisches Patentamt

European Patent Office

Office européen des brevets

(11) Publication number: **0 355 457**
A2

# EUROPEAN PATENT APPLICATION

(21) Application number: 89113840.6

(51) Int. Cl.4 **F16K 35/06**

(22) Date of filing: 27.07.89

(30) Priority: 08.08.88 IT 2168188

(43) Date of publication of application:
28.02.90 Bulletin 90/09

(84) Designated Contracting States:
AT BE CH DE ES FR GB GR IT LI LU NL SE

(71) Applicant: GREINER S.P.A.
Via Montesuello 212
I-25065 Lumezzane S.S. (Brescia)(IT)

(72) Inventor: Lena, Roberto
Via Rossaghe 49
I-25065 Lumezzane S.S. (Brescia)(IT)

(74) Representative: Modiano, Guido et al
MODIANO, JOSIF, PISANTY & STAUB
Modiano & Associati Via Meravigli, 16
I-20123 Milano(IT)

(54) Valve structure with key-operated lock.

(57) The valve structure (1) comprises a valve body (2) which defines an inlet port and an outlet port, wherebetween a spherical shutter (5) is interposed; the shutter (5) has a diametrical passage port (6) and can be actuated by a stem (7) which is rotatably supported by the valve body (2). The peculiarity of the invention resides in the fact that it comprises a lock cylinder (17) associable with the stem (7) and supported in a seat defined by at least one actuation element (21) rotatably associated with the valve body (2). The lock cylinder (17) engages a diametrically movable slider (31) which can be inserted in a notch (40) defined by the valve body (2), when the valve (1) is in at least one preset position, so as to releasably lock the rotation of the stem (7).

Fig. 10

## VALVE STRUCTURE WITH KEY-OPERATED LOCK

The present invention relates to a valve structure with key-operated lock.

As known. flow cutoff valves are currently used in systems for circulating fluids such as liquids, gases and the like; said valves are provided with means for locking their actuation.

Said locking means are generally constituted by a padlock. lock or similar elements which lock the actuation of the valve's shutter, preventing the valve from being actuated by unauthorized personnel.

In known embodiments, the key must be available in order to actuate the valve, and this constitutes in many cases a severe limitation for the use of the valve itself.

The aim of the present invention is indeed to eliminate the disadvantages described above by providing a valve structure with key-operated lock which allows to perform the locking, if required, while allowing the use of the valve without a key, in which case the valve behaves like a conventional valve not equipped with locking means.

Within the scope of the above described aim, a particular object of the invention is to provide a valve structure which has a particularly compact configuration. thus facilitating its installation in various fields of application.

Another object of the present invention is to provide a valve structure which, by virtue of its peculiar characteristics, is capable of giving the greatest assurances of reliability and safety in use.

Not least object of the present invention is to provide a valve structure with key-operated lock which can be easily obtained from elements and materials which are commonly commercially available and which is competitive from a merely economical stand point.

The above described aim and objects, and other objects which will become apparent hereinafter are achieved by a valve structure with key-operated lock, according to the invention, comprising a valve body defining an inlet port and an outlet port, wherebetween a spherical shutter is interposed, said shutter having a diametrical passage port and being actuatable by a stem, rotatably supported by said body, characterized in that it comprises a lock cylinder, associable with said stem and rotatably supported in a seat defined by an actuation element rotatably supported by said body, said lock cylinder engaging a slider which is diametrically movable and insertable in a notch defined by said body, so as to releasably lock the rotation of said stem, when said valve is in at least one preset position.

Further characteristics and advantages will become apparent from the description of a preferred but not exclusive embodiment of a valve structure with key operated lock, illustrated only by way of non limitative example in the accompanying drawings, wherein:

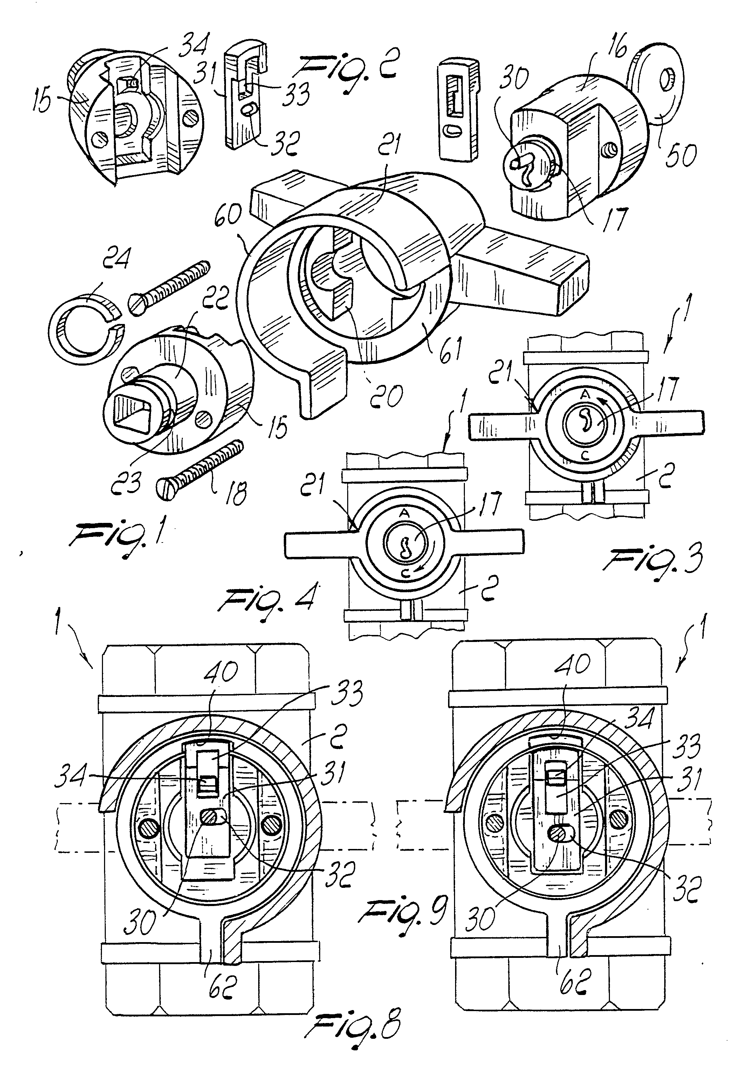

figure 1 is a schematic exploded perspective view of the lock cylinder applied to the valve actuation assembly;

figure 2 is an exploded perspective view of the diametrical slider;

figure 3 is a view of the valve in its closure position with the lock in an open position;

figure 4 is a view of the valve in closed condition, with the lock in closed position, i.e. preventing rotation;

figure 5 is a schematic view of the valve in open position, with the lock means in open position;

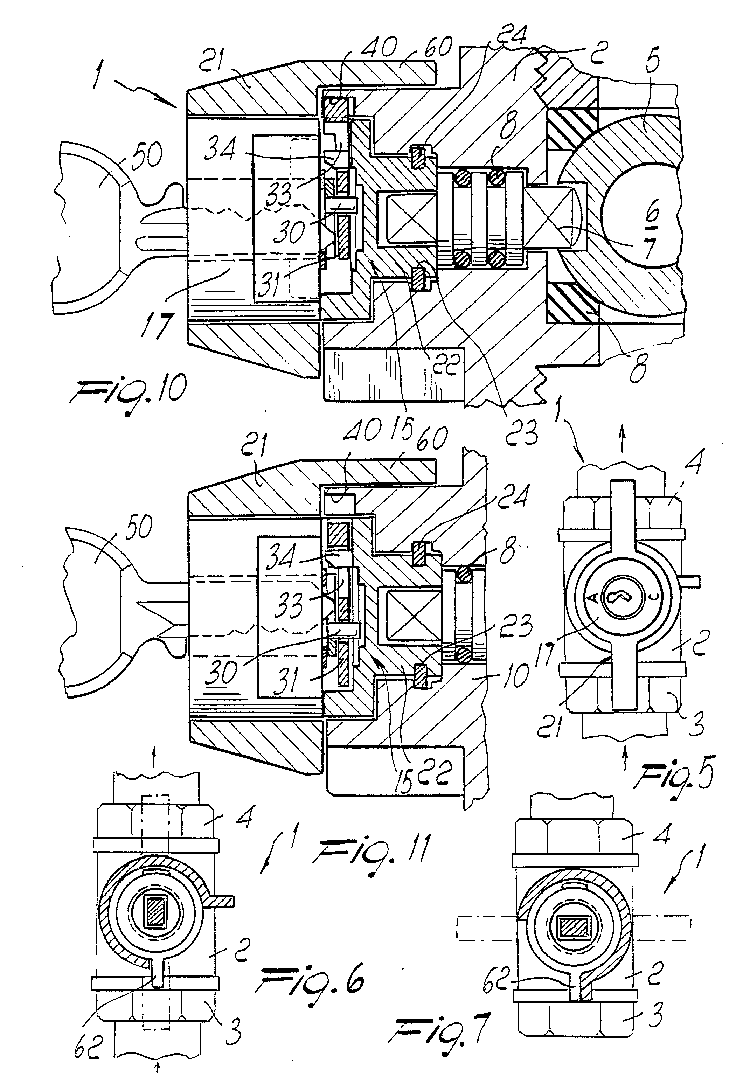

figures 6 and 7 are schematic sectional views of the valves at the level of the stem, respectively in its open position and in its closed position;

figures 8 and 9 are sectional views of the valve, taken along a plane which is substantially perpendicular to the stem at the level of the slider, respectively in a closed position and in an open position;

figures 10 and 11 are longitudinal sectional views of the valve structure, respectively in closed position and in open position.

With reference to the above described figures, the valve structure, generally indicated by the reference numeral 1, comprises a body 2 which defines an inlet port 3 and an outlet port 4. A spherical shutter 5 is provided inside said body 2; said shutter is provided with a diametrical hole 6 and is rotatable so as to couple with a stem 7, and sealing gaskets, generally indicated by the reference numeral 8, furthermore act against the shutter 5 and on the outer surface of the stem 7.

Said stem 7 is rotatably accommodated in a tang 10 of the body 2 and engages, at the end arranged opposite to the end which couples to the shutter 5, a connection 15 with which a small block 16 can be associated; said block supports a lock cylinder indicated by the reference numeral 17.

The connection 15 and the block 16 are mutually associable by means of screws 18 which lock on shoulders 20 defined on an actuation element 21, for example of the butterfly type, which is associable with the tang 10 of the body 2 to perform the rotation.

The connection 15 defines an insertion tab or tang 22 which has an annular seat 23 in which a split ring 24 is provided to axially retain the connection 15 inside the tang 10.

The lock cylinder 17 has an eccentric pin 30 which engages a diametrical slider 31 which is slidably supported by the connection 15 on the face with which it couples to the block 16. More precisely, the slider 31 defines a transverse slot 32 in which the eccentric pin 30 is inserted, and has a longitudinal slot 33 which slidably associates with a guiding tooth defined by the connection 15.

The slider 31 is diametrically slidable so as to be inserted, in a locking position, in one or more notches 40 correspondingly defined on the tang so as to allow to lock the rotation when the valve is in one or more preset positions. In the illustrated case, a single notch 40 is provided to lock the valve in closed position.

The locking cylinder is of the kind which allows to remove the key with the lock in a closed position and with the lock in an open position.

Accordingly, when the valve is in a locked condition, by acting with the key 50 the lock cylinder can be rotated so as to insert the slider 31 in the notch 40, consequently effecting locking of the valve.

It is also naturally possible to keep the lock in an open position, consequently using the valve like a conventional valve not equipped with a key.

In a per se known manner, the grip element has a cylindrical skirt or casing 60 which has a recess 61 along a quarter of circumference and engages a radial tab 62 defined by the body 2 at the tang 10, thus providing the two stroke limit positions, i.e. the opening and closure positions of the valve.

From what has been described above it can be seen that the invention achieves the proposed aims, and in particular the fact is stressed that a structurally very simple and rational assembly is provided which allows the actuation position of the valve to be locked, if required, when the valve is in a closed position or in other presettable positions according to requirements, while the valve can be used conventionally when the lock is set in an open position.

The invention thus conceived is susceptible to numerous modifications and variations, all of which are within the scope of the inventive concept.

All the details may furthermore be replaced with other technically equivalent elements.

In practice, any materials, contingent shapes and dimensions, may be employed according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Valve structure (1) with key-operated lock, comprising a valve body (2) defining an inlet port (3) and an outlet port (4), wherebetween a spherical shutter (5) is interposed, said shutter (5) having a diametrical passage port (6) and being actuated by a stem (7) rotatably supported by said body (2), characterized in that it comprises a lock cylinder (17), associable with said stem (7) and rotatably supported in a seat defined by an actuation element (21) rotatably supported by said body (2), said lock cylinder (17) engaging a slider (31) which is diametrically movable and insertable in a notch (40) defined by said body (2) to releasably lock the rotation of said stem (7), when said valve is in at least one preset position.

2. Valve structure (1), according to claim 1, characterized in that it comprises a connection (15) associable with said stem (7) and being connected to a block (16), rotatably supporting said lock cylinder (17), said lock (17) and said connection (15) being mutually locked and retained inside the seat defined by the actuation element (21).

3. Valve structure (1), according to claim 1, characterized in that said lock cylinder (17) has an eccentric pin (30) engageable with a transverse slot (32) defined by said slider (31), said slider (31) defining a longitudinal slot (33) engageable with a tooth defined by said connection (15) on the face directed towards said block (16).

4. Valve structure (1), according to one or more of the preceding claims, characterized in that said notch (40) is defined by said body (2) at a tang (10) rotatably supporting said stem (7), said notch (40) being arranged at said slider (31), with said actuation element (21) in a position corresponding to said at least one preset position of the valve (1).

5. Valve structure (1) according to one or more of the preceding claims, characterized in that the actuation key (50) of said lock cylinder (17) can be extracted from said cylinder (17) in the lock's closure position and in the lock's opening position.

Fig. 2

Fig. 1

Fig. 4

Fig. 3

Fig. 9

Fig. 8

Fig.10

Fig.11

Fig.5

Fig.6

Fig.7